# EUROPEAN PATENT SPECIFICATION

(11) **EP 4 275 867 B1**
(45) Date of publication and mention of the grant of the patent: **03.09.2025**
(21) Application number: 23000069.7
(22) Date of filing: 03.05.2023
(51) Int. Cl.: B29C 53/08, B29C 53/82

(54) **MACHINE AND PROCESS FOR BENDING THERMOPLASTIC TUBES**
VORRICHTUNG UND VERFAHREN ZUM BIEGEN VON ROHREN AUS THERMOPLASTISCHEM KUNSTSTOFF
MACHINE ET PROCÉDÉ POUR CINTRER DES TUBES EN MATIÈRE THERMOPLASTIQUE

(30) Priority: 05.05.2022 IT 202200009221
(43) Date of publication of application: 15.11.2023
(73) Proprietor: CRIPPA S.r.l. con socio unico, 22060 Arosio (CO) (IT)
(72) Inventor: PACE, Alessandro, 24024 Arosio (Como) (IT); FULCO, Domenico, 24024 Arosio (Como) (IT)
(74) Representative: Nemni, Raffaello

(56) References cited:
- WO-A2-2014/143762
- IT-A1- 202000 004 423

## Description

### Object of the invention

The object of the present invention is a machine and a process for bending thermoplastic tubes.

### Present status of the art

Thermoplastic tubes are used to convey liquids and vapours in many applications. These tubes have very stable proprieties in a variety of heath and light conditions and are consequently suitable for transporting a wide range of liquids for a wide range of applications, think, by way of non-limiting example, to the automotive sector and specifically to transportation of fuel and vapours thereof.

In the various applications adopted by the various production industries, tubes shall be bent with various bend radii, bending rotations and distances between the various curves. This bending process requires a sequence of heating, bending, and cooling operations on portions of the tube to be bent.

Many methods are in use for bending thermoplastic tubes. In the known bending methods, the tube, in its straight form, is heated with hot air or other means. The tube is cold inserted into moulded dies manually by forcing its position and is subsequently connected to a device that blows hot and cold air alternatively, in order to model and cool the tube. Once the desired shape of the tube is obtained, this one is removed from the shaping tool.

This bending method is very delicate, and the tools used are expensive and not easily re-configurable.

A thermoplastic tube bending method is also known in which, while a pre-heated portion of the tube is bent and cooled, another portion of the tube is heated in order for it to be subsequently bent and cooled, and so on for all specified working cycles of the tube to be bent. The document IT2020000004423 describes such a bending method.

A drawback of this further thermoplastic tube portion bending method is in that the time duration of a tube portion bending and cooling phase is, in most cases, longer than the time duration of the heating phase of the other portion of the tube to be bent. Remember that the portion of the tube to be bent shall be sufficiently heated in order to render the tube sufficiently plastic for being bent, but at the same time the portion of the tube shall not lose its original cold structure and shape. A Therefore, the heating phase is a very delicate one. Bringing to, but even more important maintaining the portion of the tube to be bent at the desired heating temperature in order to render it sufficiently plastic for bending for the time duration necessary for submitting another portion of the tube to bending and cooling entails major drawbacks.

In order to overcome the drawbacks of the known methods, the present invention provides a new and advantageous machine for bending filiform thermoplastic materials, such as a thermoplastic tube, to embody a new and advantageous filiform thermoplastic material such as a tube, here below simply referred to as "tube", bending process by heating a bending core heated and positioned inside the tube to be bent, capable of heating the portion of the tube to be bent and of recovering of the thermal energy in excess to prepare the subsequent portion of the tube to be heated and bent. Said method according to the present invention allows to bend the tube while preventing waste of energy. Such bending core is formed of a set of sectors that can be heated in an independent and programmable manner. Said bending machine and procedure are better described in the following paragraphs.

### Description of the invention

Thanks to this innovative and advantageous bending process, tube bending can be performed by using a new and advantageous tube bending machine which comprises a tube positioner assembly, a bending head provided with a tube blocking device, at least one die, at least one contrast device, and a puller assembly connected to a tie rod. Said tie rod, moved by the puller, is integrally connected to a core body in order for said core body to be positioned inside the tube to be bent. The positioning of the core body inside the tube to be bent aims at heating the portion of the tube to be bent, as better illustrated here below, in order to render the portion of the tube to be bent sufficiently plastic for being advantageously bent accurately and with an optimum quality of bending and of the bent thermoplastic material.

The core body is heated by using a heating apparatus, preferably an induction one comprising an inductor device such as an induction coil. Said heating apparatus might also be formed, for example, of a set of electrical resistors and could in any way consist of any heating apparatus. Said heating apparatus is governed by a programmable control unit. Said programmable control unit is suitable for giving instructions to the heating apparatus for selecting the sectors of the core body to be heated and the temperature the sectors should reach on the basis of a predetermined working program, by receiving a signal that represents the temperature reached by the portion of the heated core body and/or from the portion of the tube to be bent from a temperature sensor, which every sector of the core body is provided with.

In order to better select the portions of the core body to be heated, while preventing energy dispersion, and to concentrate the core body heating only in the section of interest and consequently to only heat the portion of the tube to be bent, a suitable core body is formed of at least two sectors independent of each other.

While bending the portion of the tube to be bent, it is necessary to be in a position to calibrate said portion of the tube. Said calibration is implemented by a set of articulated elements suitable for performing such calibration of the portion of the tube to be bent, which are positioned at one end of the core body, specifically in that portion which is opposed to the point of contact of the core body with the tie rod.

Upon finishing the bending process of the portion to be bent, the bent portion of the tube is still in its plastic status and needs to come back to a rigid status by cooling, an operation that is facilitated and speeded up by way of an air cooling device.

The machine for bending tubes described here above is suitable for implementing an innovative and advantageous bending process on a thermoplastic tube, which comprises eight phases.

In the first phase of said process, the portion of the tube to be bent is positioned in the bending area interposed between the die of the bending head and the contrast device by way of a positioner assembly, which a heating apparatus, preferably an induction one comprising an inductor device such as an induction coil, is connected to. Said heating apparatus is governed by a programmable control unit, whereby a core body is heated according to a specific program. The core body is positioned inside the thermoplastic tube by way of a tie rod moved by a puller assembly, said core body being integral with the tie rod. Said core body is formed of at least two sectors independent of each other.

In the second phase of the process, the portion of the tube to be bent is blocked by a blocking device mounted on the bending head.

In the third phase of the process, the portion of the tube to be bent is heated by way of a heating apparatus, preferably an inductor device, which heats the portion of the tube to be bent through the heating of one or several sectors of the core body depending on the portion of the tube to be bent. Such capability of heating each of said sectors independently of each other is implemented by the heating apparatus, said heating apparatus being governed by the programmable control unit which continuously receives a signal that represents the temperature reached by the sectors submitted to heating and/or the temperature of the tube to be bent from a temperature sensor, which every sector of the core body is provided with. The intensity of the heating provided by the heating apparatus of the various sectors of the core body is controlled and governed according to a specific program by the programmable control unit, which modifies the heating intensity according to a signal that represents the temperature reached by the individual sectors and/or the temperature of the portion of the tube to be bent. Such signal is continuously sent by the temperature sensor which every sector of the core body is provided with.

In the fourth phase of the process, the positioner assembly is retracted to reach a position outside the bending area, once the portion of the tube to be bent reaches a temperature suitable for rendering the portion of the tube to be bent sufficiently plastic for being bent.

In the fifth phase of the process, the portion of the tube to be bent is positioned inside the throat of the die and is blocked in said portion of the tube to be bent by way of a contrast device.

In the sixth phase of the process, the portion of the tube to be bent is bent by way of the movement of the bending head and the curve of the portion of the tube to be bent is calibrated by way of articulated elements placed at the end of the core body in a position opposed to the point of contact of the tie rod with the core body.

In the seventh phase of the process, the core body is retracted by way of the retraction of the puller assembly connected to the tie rod, said core body being integral with the tie rod, up to reaching the portion of the tube that will be subjected to the subsequent bending phase. In the same phase, the bent tube is cooled upon completion of the bending cycle. Such cooling takes place by way of a device used for air cooling the portion of the bent tube. Retracting the bending core in the portion of the tube to be bent during the subsequent cycle results in a sectorial passive heating action. Such sectorial passive heating allows to prepare the portion of the tube to be bent in the subsequent bending cycle a little bit before said portion of the tube starts its sectorial active heating phase aiming at bringing the latter portion of the tube to a temperature suitable for rendering it sufficiently plastic for being bent. Such retraction makes it possible to recover the residual heat of the bending core thus rendering the process more efficient.

In the eighth phase of the process, the device used to block the portion of the bent tube is released and the die, the contrast device, and the bending head are retracted to their rest positions in order to start a new bending process.

Then, once the mentioned eight phases are over, the process restarts from the first phase in order to bend a tube according to the predetermined working program, also governed by the mentioned programmable control unit.

### Description of the figures

Figure 1 shows a perspective schematic view of the bending area of the machine for bending tubes.
Figure 2 shows the moving and positioning portion of the machine for bending tubes during the core body activation phase, in a bidimensional form.
Figure 3 shows the portion of the machine for bending tubes related to the structure of the core body, in a bidimensional form.
Figure 4 shows the first phase of the process according to the present invention.
Figure 5 shows the second phase of the process according to the present invention.
Figure 6 shows the third phase of the process according to the present invention.
Figure 7 shows the fourth phase of the process according to the present invention.
Figure 8 shows the fifth phase of the process according to the present invention.
Figure 9 shows the sixth phase of the process according to the present invention.
Figure 10 shows the eighth phase of the process according to the present invention.

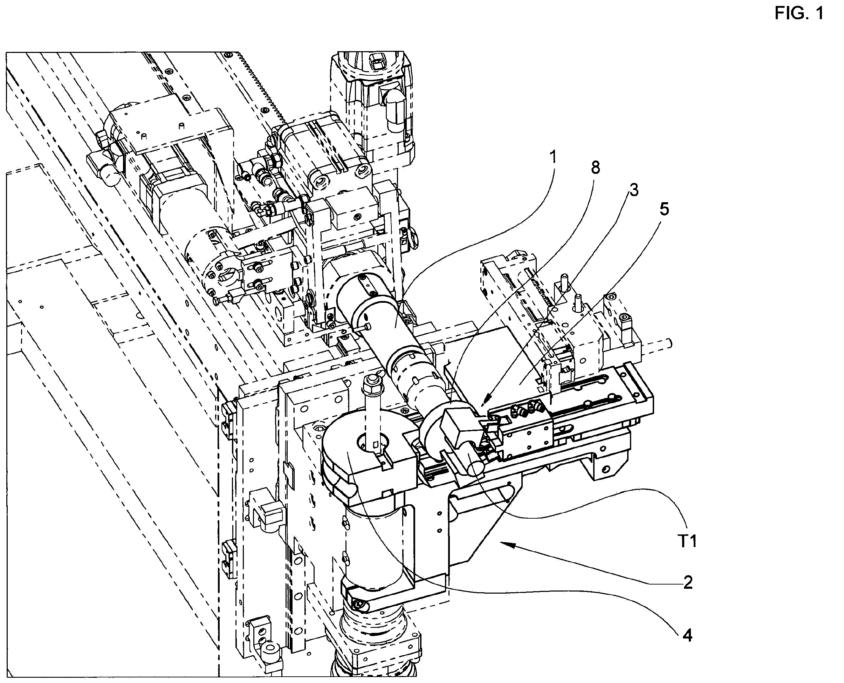

Figure 1 shows the bending area of the machine for bending a thermoplastic tube. Said figure shows a tube positioner assembly (1), a bending head (2) provided with a tube blocking device (3), at least one die (4), at least one contrast device (5), and a heating apparatus (8), preferably an induction one comprising an inductor device such as an induction coil. Such heating apparatus (8) also comprises a programmable control unit (A), not shown in the figures, suitable for governing the heating apparatus (8). Said heating apparatus (8) is integrally connected to the positioner assembly (1).

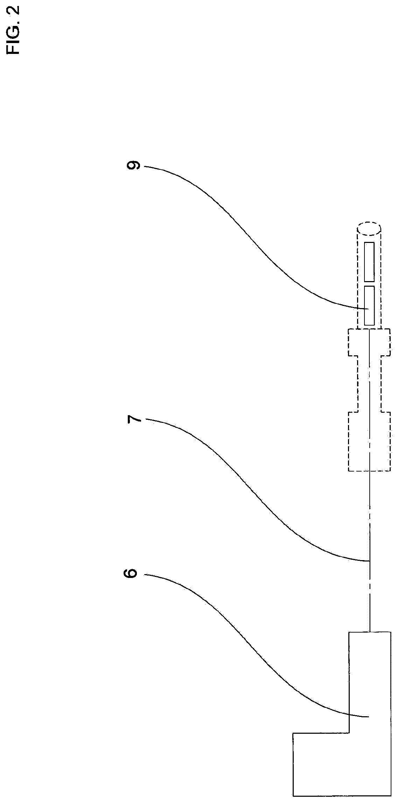

Figure 2 shows a puller assembly (6) suitable for moving a tie rod (7) connected thereto and a core body (9) suitable for being heated and integrally connected to the tie rod (7).

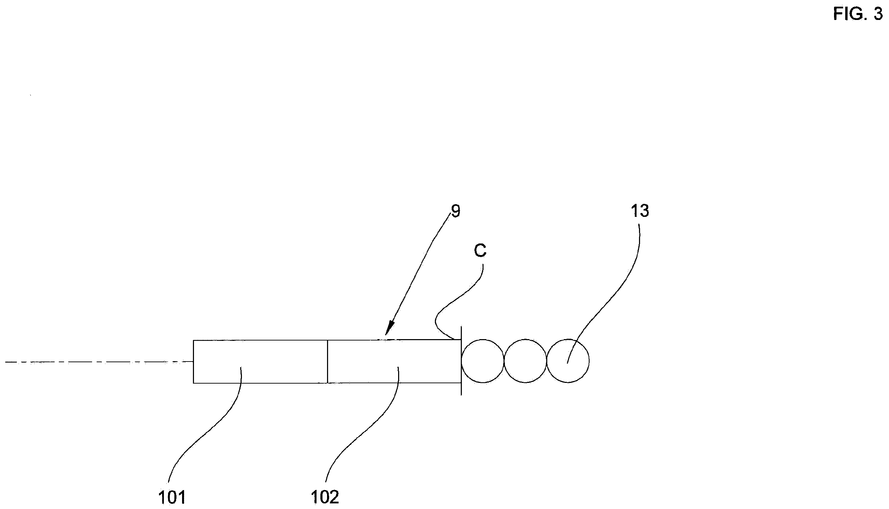

Figure 3 shows the core body (9) suitable for being heated and formed of at least two sectors (101, 102) independent of each other.

Figure 3 also shows a set of articulated elements (13) suitable for calibrating the portion of the tube to be bent (T1), not shown in the figures, positioned at one end (C) of the core body (9), also provided with an air cooling device (12) for cooling the bent tube (T2); none of said elements is shown in the figures.

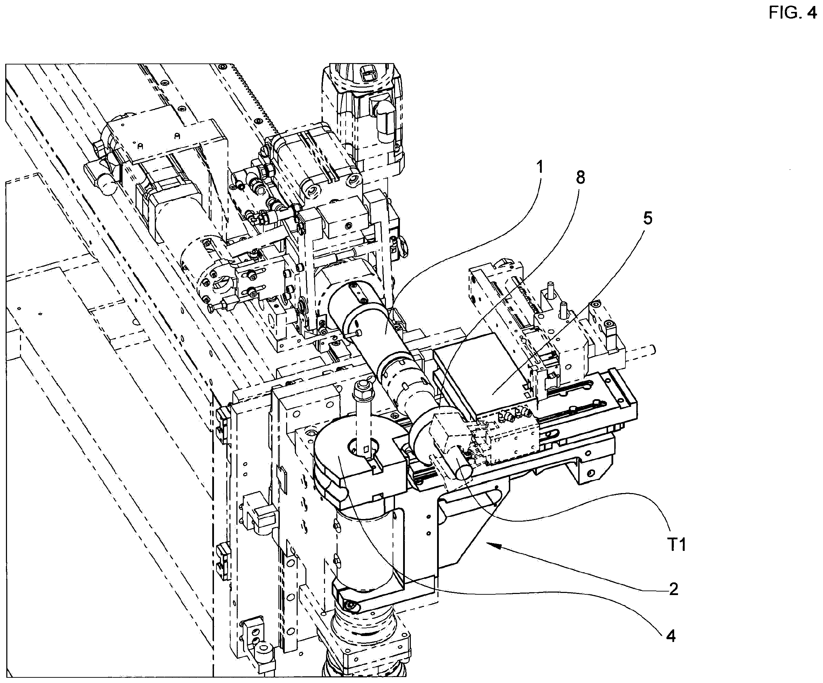

Figure 4 shows the **first phase** of the process, whereby the portion of the tube to be bent (T1) is positioned in the bending area interposed between the die (4) of the bending head (2) and the contrast device (5) by way of the positioner assembly (1), which a heating apparatus (8), preferably an induction one comprising one inductor device such as an induction coil, and a programmable control unit (A), not shown in the figures, are connected to. This phase comprises the positioning of a core body (9), not shown in the figures, suitable for being heated, internally to the thermoplastic tube, said positioning being implemented by way of the tie rod (7), not shown in the figures, integrally connected to the puller assembly (6), not shown in the figures, said core body (9) being integral with the tie rod (7). Said core body (9) is formed of at least two sectors (101 and 102), not shown in the figures, independent of each other. Remember that the heating apparatus (8) is governed by the programmable control unit (A).

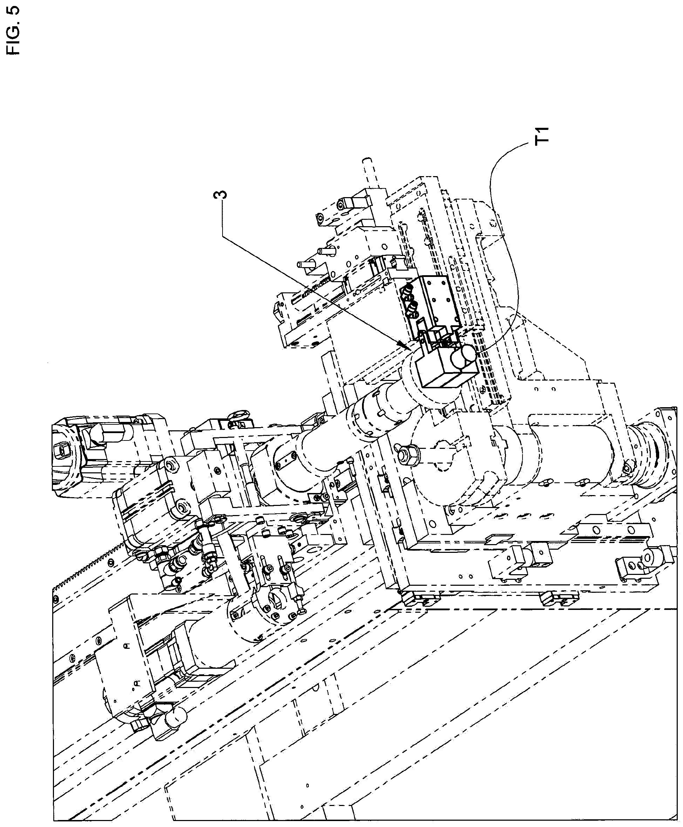

Figure 5 shows the **second phase** of the process, whereby the portion of the tube to be bent (T1) is blocked by way of the blocking device (3).

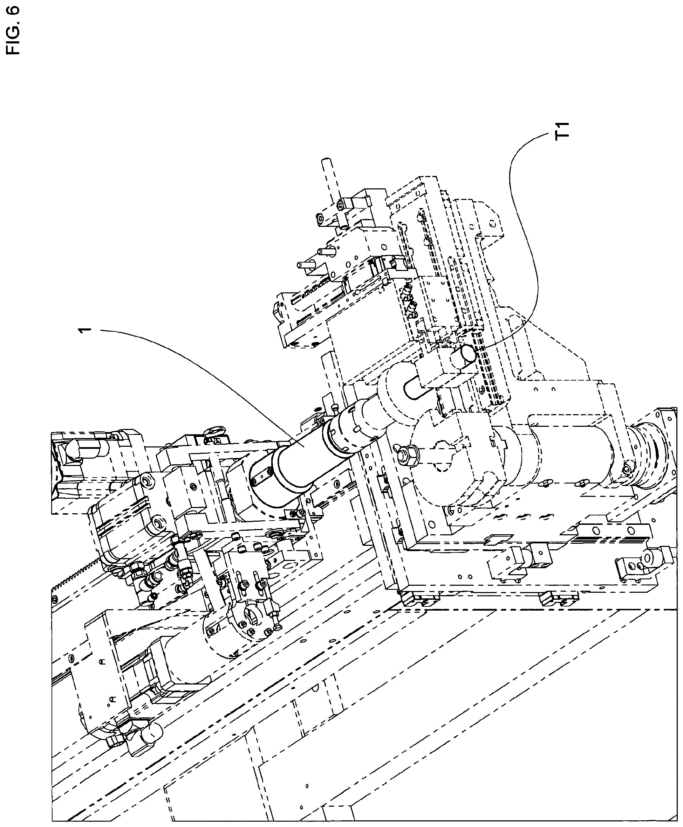

Figure 6 shows the **third phase** of the process, whereby the portion of the tube to be bent (T1) is heated by way of the heating apparatus (8), which heats the portion of the tube to be bent (T1), preferably by way of the induction heating of one or more sectors (101 and 102) of the core body (9), not shown in the figures, the latter being internal to the tube to be bent, depending on the portion of the tube to be bent (T1), heating being possible independently for each of said sectors (101 and 102) of the heating apparatus (8), said heating apparatus (8) being governed by the programmable control unit (A), not shown in the figures, which continuously receives a signal that represents the temperature reached by the sectors (101 and 102) submitted to heating by the heating apparatus (8) and/or the temperature of the portion of the tube to be bent (T1) from the temperature sensor (B), not shown in the figures, which every sector of the core body (9) is provided with.

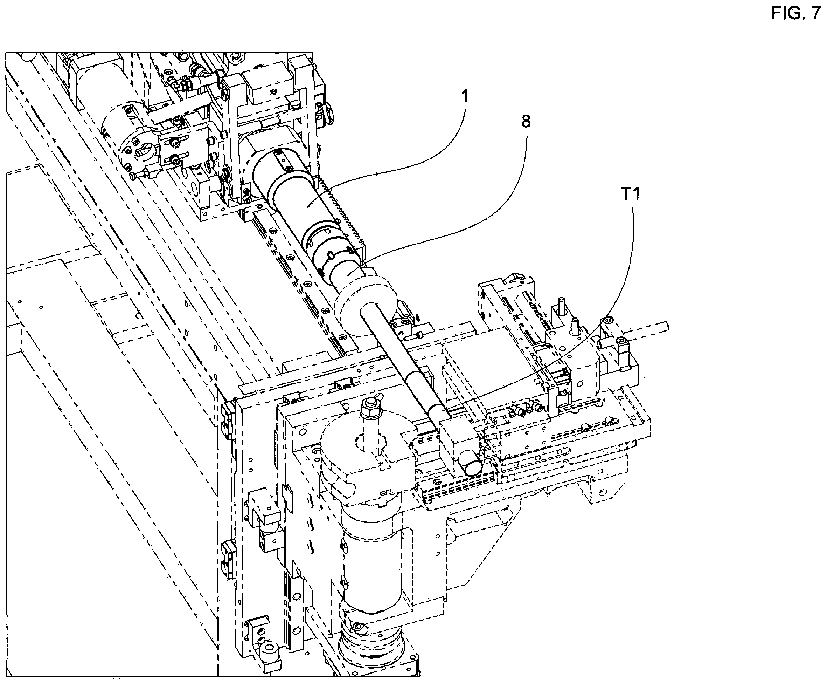

Figure 7 shows the **fourth phase** of the process, whereby the positioner assembly (1) is retracted. Said retraction of the positioner assembly (1) positions it outside the bending area, once the portion of the tube to be bent (T1) reaches a temperature suitable for rendering the portion of the tube to be bent sufficiently plastic for being bent.

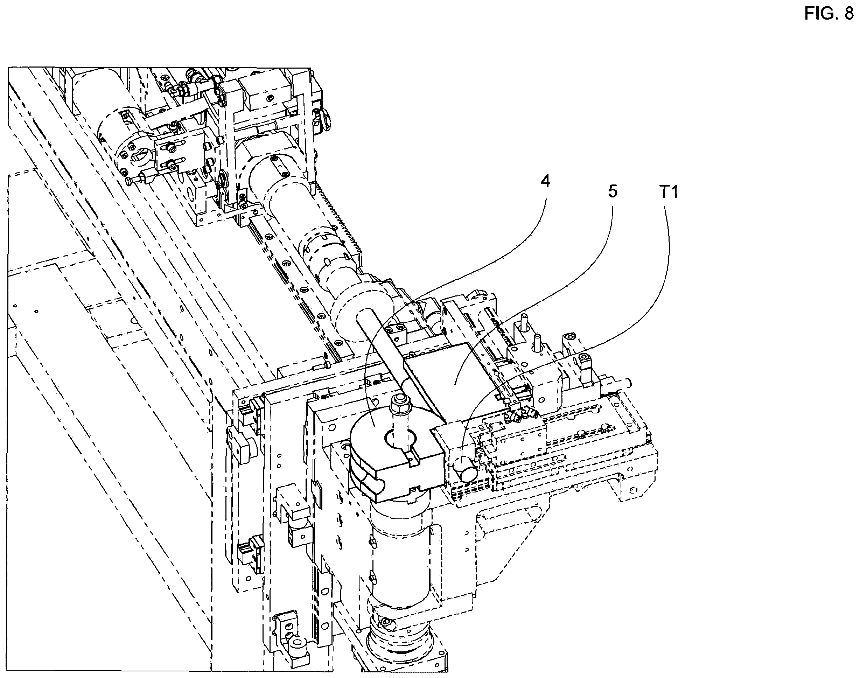

Figure 8 shows the **fifth phase** of the process, whereby the portion of the tube to be bent (T1) is positioned inside the throat of the die (4) and said portion of the tube to be bent (T1) is blocked by way of a contrast device (5).

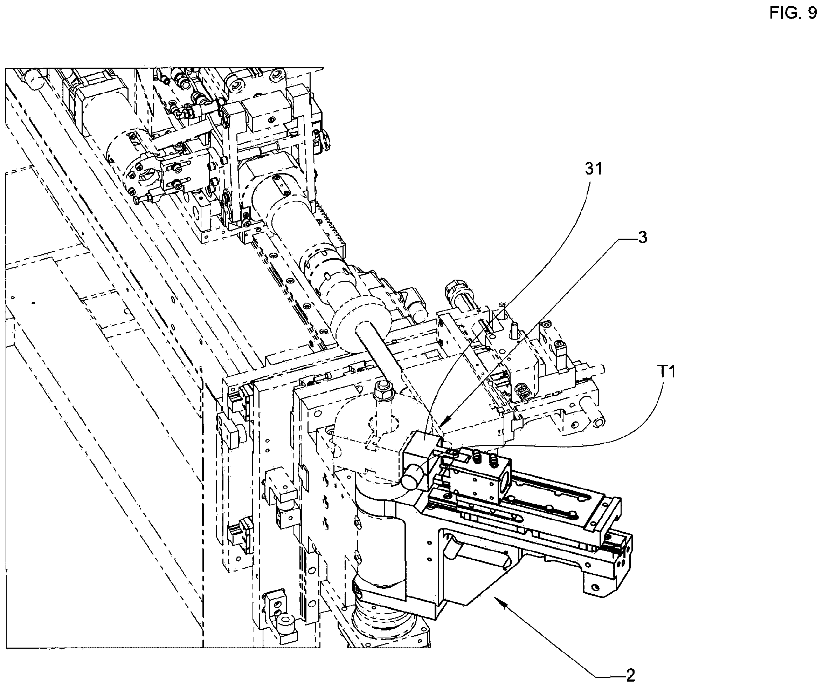

Figure 9 shows the **sixth phase** of the process, whereby the portion of the tube to be bent (T1) is bent thanks to the movement of the bending head (2) and the curve of the portion of the tube to be bent (T1) is calibrated by way of articulated elements (13), not shown in the figures, placed at the end of the core body (9), not shown in the figures, in a position opposite to that of the point of contact of the tie rod (7) with the core body (9), not shown in the figures. For an easy identification of the position of said articulated elements (13), note that they are located in an internal proximity to the tube to be bent (T1), of the position of the gripper (31) of the blocking device (3).

The process continues with the **seventh phase,** not shown in the figures, whereby the core body (9) is retracted by way of the retraction of the puller assembly (6) connected to the tie rod (7), said core body (9) being integral with the tie rod (7), up to reaching the portion of the tube that will be submitted to the successive bending phase and the bent portion of the tube (T2) is cooled by way of an air cooling device (12) upon completion of the bending cycle.

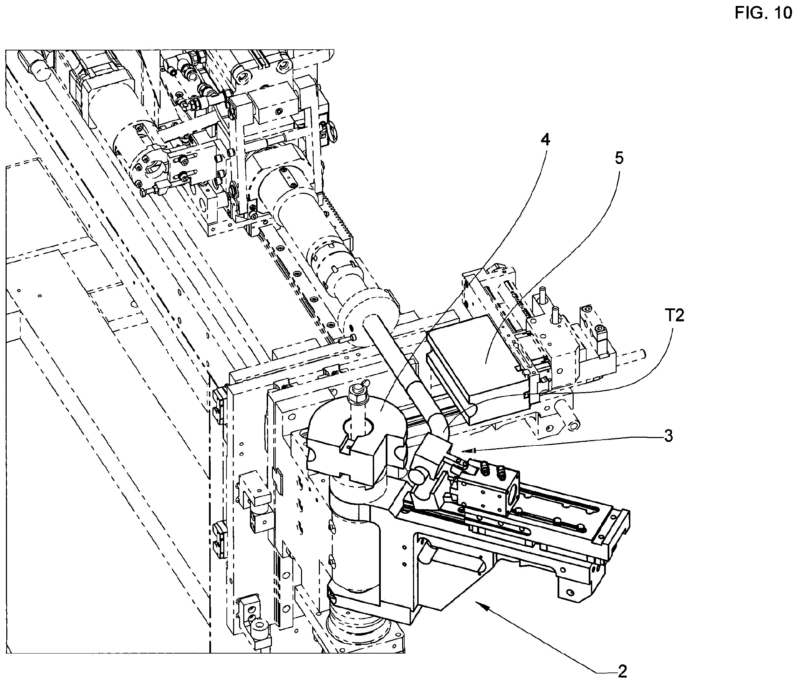

Figure 10 shows the **eighth phase** of the bending process, whereby the blocking device (3) is released (3) from the bent portion of the tube (T2) and the die (4) and the contrast device (5) and the bending head (2) are retracted to their rest position in order to start a new bending process.

## Claims

1. A machine for bending filiform thermoplastic material such as a tube comprising a tube positioning unit (1), a bending head (2) provided with a tube block device (3), at least one die (4), at least one contrast device (5), a puller unit (6) connected to a tie rod (7) which is solidly connected to a core body (9) wherein it includes a heating apparatus (8) and a programmable control unit (A) and the core body (9) suitable for being heated for sectors by the heating apparatus (8) which is an induction equipment comprising an inductor device such as at least one induction coil.

2. The machine for bending filiform thermoplastic material according to claim 1 **characterized in that** the heating apparatus (8) is governed by the programmable control unit (A) which gives instructions for selecting the sectors of the core body (9) to be heated.

3. The machine for bending filiform thermoplastic material according to claim 1 **characterized in that** a series of articulated elements (13) suitable for calibrating the portion of the tube to be bent (T1) are positioned at one end (C) of the core body (9) suitable for being heated.

4. The machine for bending filiform thermoplastic material according to claim 1 **characterized in that** the core body (9) suitable for being heated is formed by at least two sectors (101, 102) which are independent of each other.

5. The Machine for bending threadlike thermoplastic material according to claim 4 **characterized in that** the at least two sectors (101, 102) independent from each other are each provided with a temperature sensor (B) suitable for sending signals representing a temperature to the programmable control unit (A).

6. The machine for bending filiform thermoplastic material according to claim 4 **characterized in that** the core body (9) suitable for being heated is provided with a device for air cooling (12) of the bent tube (T2).

7. A process for bending filiform thermoplastic material such as a tube by means of the machine according to the preceding claims **characterized in that** it comprises the following steps: **first step of** positioning of the portion of the tube to be bent (T1) in the bending area placed between the die (4) of the bending head (2) and the contrast device (5) by the positioning unit (1) to which is connected a heating apparatus (8) by induction comprising an inductor device , such as an induction coil and a programmable control unit (A) and positioning a core body (9) suitable to be heated by induction inside the thermoplastic tube, said positioning being realized by the tie rod (7) connected to the puller unit (6) being said core body (9) connected to the tie rod (7), said core body (9) is formed of two sectors (101 and 102) at least which are independent from each other and it is heated by the heating apparatus (8) controlled by the programmable control unit (A); **second phase of** blocking the portion of the tube to be bent (T1) by the block device (3); **third phase of** heating of the portion of the tube to be bent (T1) by the heating device (8), the inductor device, which heats the portion of the tube to be bent (T1) by heating one or more sectors (101 and 102) of the core body (9) according to the portion of the tube to be bent (T1) and being possible the heating independently of each of said sectors (101 and 102) by the heating device (8) being said heating device (8) governed by the programmable control unit (A) which continuously receives from the temperature sensor (B) of each sector of the core body (9) the signal representing the temperature reached by the sectors (101 and 102) subjected to heating by the heating device (8), by the inductor device and/or the temperature of the tube to be bent (T1); **fourth phase of** retraction of the positioner unit (1) out of the bending area having the portion tube to be bent (T1) reached the temperature to make the portion of tube to be bent (T1) sufficiently plastic to be bent; **fifth phase of** positioning the portion of the tube to be bent (T1) inside the throat of the die (4) and clamping said portion of the tube to be bent (T1) by the contrast device (5); **sixth phase of** bending of the portion of the tube to be bent (T1) by the movement of the bending head (2) and calibration of the curve of the portion of the tube to be bent (T1) by the articulated elements (13) placed at the end of the core body (9) opposite to the point of contact of the tie rod (7) with the core body (9); **seventh phase of** the retraction of the core body (9) by the retraction of the extractor unit (6) connected to the tie rod (7) being said core body (9) connected to the tie rod (7) in the portion of the tube that will be subject to the next phase of bending and cooling of the bent portion of tube (T2) at the completion of the bending cycle by an air cooling device (12): **eighth phase of** releasing the tube block device (3) from the portion of the bented tube (T2), retracting the die (4) and the contrast device (5) and the bending head (2) to the rest position to begin a new bending process.

## Patentansprüche

1. Maschine zum Biegen von fadenförmigem thermoplastischem Material, wie beispielsweise einem Rohr, mit einer Rohrpositioniereinheit (1), einem Biegekopf (2), der mit einer Rohrblockiervorrichtung (3) versehen ist, mindestens einer Matrize (4), mindestens einer Kontrastvorrichtung (5), eine Zieheinrichtung (6), die mit einer Zugstange (7) verbunden ist, die fest mit einem Kernkörper (9) verbunden ist, wobei sie eine Heizeinrichtung (8) und eine programmierbare Steuereinheit (A) umfasst, und wobei der Kernkörper (9) geeignet ist, durch die Heizeinrichtung (8) sektorweise erwärmt zu werden, wobei eine Induktionsvorrichtung eine Induktionsvorrichtung wie mindestens eine Induktionsspule umfasst.

2. . Maschine zum Biegen von fadenförmigem thermoplastischem Material gemäß Anspruch 1, **dadurch gekennzeichnet, dass** die Heizeinrichtung (8) von der programmierbaren Steuereinheit (A) gesteuert wird, die Anweisungen zur Auswahl der zu erwärmenden Sektoren des Kernkörpers (9) gibt.

3. . Maschine zum Biegen von fadenförmigem thermoplastischem Material gemäß Anspruch 1, **dadurch gekennzeichnet, dass** eine Reihe von Gelenkelementen (13), die zum Kalibrieren des zu biegenden Rohrteils (T1) geeignet sind, an einem Ende (C) des Kernkörpers (9), der zum Erhitzen geeignet ist, positioniert sind.

4. . Maschine zum Biegen von fadenförmigem thermoplastischem Material gemäß Anspruch 1, **dadurch gekennzeichnet, dass** der zum Erwärmen geeignete Kernkörper (9) aus mindestens zwei voneinander unabhängigen Sektoren (101, 102) gebildet ist

5. . Maschine zum Biegen von fadenförmigem thermoplastischem Material gemäß Anspruch 4, **dadurch gekennzeichnet, dass** die mindestens zwei voneinander unabhängigen Sektoren (101, 102) jeweils mit einem Temperatursensor (B) versehen sind, der dazu geeignet ist, Signale, die eine Temperatur repräsentieren, an die programmierbare Steuereinheit (A) zu senden.

6. . Maschine zum Biegen von fadenförmigem thermoplastischem Material gemäß Anspruch 4, **dadurch gekennzeichnet, dass** der zum Erwärmen geeignete Kernkörper (9) mit einer Vorrichtung zum Kühlen (12) des gebogenen Rohrs (T2) mit Luft versehen ist.

7. . Verfahren zum Biegen von fadenförmigem thermoplastischem Material, wie beispielsweise einem Rohr, mittels der Maschine gemäß den vorstehenden Ansprüchen, **dadurch gekennzeichnet, dass** es die folgenden Schritte umfasst: **ersten Schritt des** Positionierens des zu biegenden Abschnitts (T1) des Rohrs im Biegebereich, der zwischen der Matrize (4) des Biegekopfes (2) und der Kontrastvorrichtung (5) angeordnet ist, durch die Positioniereinheit (1) , an die eine Induktionsheizvorrichtung (8) angeschlossen ist, die eine Induktionsvorrichtung, wie beispielsweise eine Induktionsspule, und eine programmierbare Steuereinheit (A) umfasst, und Positionieren eines Kernkörpers (9), der geeignet ist, durch Induktion innerhalb des thermoplastischen Rohrs erwärmt zu werden, wobei die Positionierung durch die mit der Zieheinheit (6) verbundene Zugstange (7) erfolgt und der Kernkörper (9) mit der Zugstange (7) verbunden ist, wobei der Kernkörper (9) aus mindestens zwei voneinander unabhängigen Sektoren (101 und 102) gebildet ist und durch die von der programmierbaren Steuereinheit (A) gesteuerte Heizvorrichtung (8) erwärmt wird; **zweite Phase des** Blockierens des zu biegenden Rohrteils (T1) durch die Blockiervorrichtung (3); **dritte Phase des** Erhitzens des zu biegenden Rohrteils (T1) durch die Heizvorrichtung (8), die Induktionsvorrichtung, die den zu biegenden Rohrteil (T1) durch Erwärmen eines oder mehrerer Sektoren (101 und 102) des Kernkörpers (9) entsprechend dem zu biegenden Rohrteil (T1) erwärmt, wobei die Erwärmung unabhängig von jedem der Sektoren (101 und 102) durch die Heizvorrichtung (8) beheizt wird, wobei die Heizvorrichtung (8) von der programmierbaren Steuereinheit (A) gesteuert wird, die kontinuierlich vom Temperatursensor (B) jedes Sektors des Kernkörpers (9) das Signal empfängt, das die von den Sektoren (101 und 102) erreichte Temperatur darstellt, die durch die Heizvorrichtung (8) durch die Induktionsvorrichtung erwärmt werden, und/oder die Temperatur des zu biegenden Rohrstücks (T1); **vierte Phase des** Zurückziehens der Positioniereinheit (1) aus dem Biegebereich, nachdem der zu biegende Rohrabschnitt (T1) die Temperatur erreicht hat, bei der der zu biegende Rohrabschnitt (T1) ausreichend plastisch ist, um gebogen zu werden; **fünfte Phase des** Positionierens des zu biegenden Rohrteils (T1) innerhalb des Halses der Matrize (4) und des Festklemmen des zu biegenden Rohrteils (T1) durch die Gegenhaltevorrichtung (5); **sechste Phase des** Biegens des zu biegenden Rohrteils (T1) durch die Bewegung des Biegekopfes (2) und Kalibrieren der Krümmung des zu biegenden Rohrteils (T1) durch die Gelenkelemente (13), die am Ende des Kernkörpers (9) gegenüber dem Kontaktpunkt der Zugstange (7) mit dem Kernkörper (9) angeordnet sind; **Siebte Phase:** Zurückziehen des Kernkörpers (9) durch Zurückziehen der mit der Zugstange (7) verbundenen Auszieheinheit (6), wobei der Kernkörper (9) mit der Zugstange (7) in dem Abschnitt des Rohrs verbunden ist, der der nächsten Biegephase unterzogen wird, und Kühlen des gebogenen Rohrteils (T2) nach Abschluss des Biegezyklus durch eine Luftkühlvorrichtung (12): **Achte Phase:** Lösen der Rohrblockiervorrichtung (3) aus dem Abschnitt des gebogenen Rohrs (T2), Zurückziehen der Matrize (4) und der Kontrastvorrichtung (5) sowie des Biegekopfes (2) in die Ruhestellung, um einen neuen Biegevorgang zu beginnen.

## Revendications

1. Machine pour cintrer des matériaux thermoplastiques filiformes tels que des tubes, comprenant une unité de positionnement de tube (1), une tête de pliage (2) pourvue d'un dispositif de blocage de tube (3), au moins une matrice (4), au moins un dispositif de contraste (5), une unité de traction (6) reliée à une tige de liaison (7) qui est solidement reliée à un corps central (9) dans lequel sont inclus un appareil de chauffage (8) et une unité de commande programmable (A), et le corps central (9) étant adapté pour être chauffé par secteurs par l'appareil de chauffage (8) qui est un équipement à induction comprenant un dispositif inducteur tel qu'au moins une bobine d'induction.

2. La machine pour cintrer des matériaux thermoplastiques filiformes selon la revendication 1, **caractérisée en ce que** l'appareil de chauffage (8) est commandé par l'unité de commande programmable (A) qui donne des instructions pour sélectionner les secteurs du corps central (9) à chauffer.

3. La machine pour cintrer des matériaux thermoplastiques filiformes selon la revendication 1, **caractérisée en ce qu'**une série d'éléments articulés (13) adaptés pour calibrer la partie du tube à plier (T1) sont positionnés à une extrémité (C) du corps central (9) adapté pour être chauffé.

4. La machine pour cintrer des matériaux thermoplastiques filiformes selon la revendication 1, **caractérisée en ce que** le corps central (9) pouvant être chauffé est formé par au moins deux secteurs (101, 102) indépendants l'un de l'autre.

5. La machine pour cintrer des matériaux thermoplastiques filiformes selon la revendication 4, **caractérisée en ce que** les au moins deux secteurs (101, 102) indépendants l'un de l'autre sont chacun pourvus d'un capteur de température (B) adapté pour envoyer des signaux représentant une température à l'unité de commande programmable (A).

6. Machine pour cintrer matériaux thermoplastiques filiformes selon la revendication 4, **caractérisée en ce que** le corps central (9) est adapté pour être chauffé avec un dispositif de refroidissement à air (12) du tube cintrée (T2).

7. Procédé pour cintrer un matériau thermoplastique filiforme tel qu'un tube au moyen de la machine selon les revendications précédentes, **caractérisé en ce qu'**il comprend les étapes suivante: **première étape de** positionnement de la partie du tube à cintrer (T1) dans la zone de cintrage située entre la matrice (4) de la tête de cintrage (2) et le dispositif de contraste (5) par l'unité de positionnement (1) à laquelle est relié un appareil de chauffage (8) par induction comprenant un dispositif inducteur , tel qu'une bobine d'induction et une unité de commande programmable (A), et le positionnement d'un corps central (9) apte à être chauffé par induction à l'intérieur du tube thermoplastique, ledit positionnement étant réalisé par la tige de liaison (7) reliée à l'unité de traction (6), ledit corps central (9) étant relié à la tige de liaison (7), ledit corps central (9) étant formé d'au moins deux secteurs (101 et 102) indépendants l'un de l'autre et étant chauffé par l'appareil de chauffage (8) commandé par l'unité de commande programmable (A) ; **deuxième phase consistant** à bloquer la partie du tube à cintrer (T1) par le dispositif de blocage (3) ; **troisième phase consistant à** chauffer la partie du tube à cintrer (T1) par le dispositif de chauffage (8), le dispositif inducteur, qui chauffe la partie du tube à cintrer (T1) en chauffant un ou plusieurs secteurs (101 et 102) du corps central (9) en fonction de la partie du tube à cintrer (T1) et en permettant le chauffage indépendamment de chacun desdits secteurs (101 et 102) par le dispositif de chauffage (8), ledit dispositif de chauffage (8) étant commandé par l'unité de commande programmable (A) qui reçoit en continu du capteur de température (B) de chaque secteur du corps central (9) le signal représentant la température atteinte par les secteurs (101 et 102) soumis au chauffage par le dispositif de chauffage (8), par le dispositif inducteur et/ou la température du tube à cintrer (T1) ; **quatrième phase de** rétraction de l'unité de positionnement (1) hors de la zone de cintrage, la partie du tube à cintrer (T1) ayant atteint la température nécessaire pour rendre la partie du tube à cintrer (T1) suffisamment plastique pour être cintrée; **cinquième phase de** positionnement de la partie du tube à cintrer (T1) à l'intérieur de la gorge de la matrice (4) et de serrage de ladite partie du tube à cintrer (T1) par le dispositif de contraste (5); **sixième phase** de cintrer de la partie du tube à cintrer (T1) par le mouvement de la tête de cintrage (2) et calibrage de la courbure de la partie du tube à cintrer (T1) par les éléments articulés (13) placés à l'extrémité du corps central (9) opposée au point de contact de la tige de liaison (7) avec le corps central (9) ; **septième phase de** la rétraction du corps central (9) par la rétraction de l'unité d'extraction (6) reliée à la tige de liaison (7), ledit corps central (9) étant relié à la tige de liaison (7) dans la partie du tube qui sera soumise à la phase suivante de cintrage et de refroidissement de la partie cintrée du tube (T2) à la fin du cycle de cintrage par un dispositif de refroidissement à air (12) : **huitième phase d' consistant** à libérer le dispositif de blocage du tube (3) de la partie du tube centrée (T2), à rétracter la matrice (4) et le dispositif de contraste (5) ainsi que la tête de pliage (2) vers leur position de repos afin de commencer un nouveau processus de centrer.
